(19) Europäisches Patentamt
European Patent Office
Office européen des brevets

(11) **EP 2 783 886 A1**

(12) **EUROPEAN PATENT APPLICATION**
published in accordance with Art. 153(4) EPC

(43) Date of publication:
**01.10.2014 Bulletin 2014/40**

(51) Int Cl.:
**B60H 1/26** (2006.01)   **F24F 7/013** (2006.01)

(21) Application number: **11876042.0**

(22) Date of filing: **24.11.2011**

(86) International application number:
**PCT/JP2011/077095**

(87) International publication number:
**WO 2013/076857 (30.05.2013 Gazette 2013/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventor: **IDE, Toyoka Toyota-shi Aichi 471-8571 (JP)**

(74) Representative: **Intès, Didier Gérard André et al Cabinet Beau de Loménie 158, rue de l'Université 75340 Paris Cedex 07 (FR)**

(54) **VENT DUCT STRUCTURE FOR VEHICLE**

(57)     [Object] To provide a vent duct for a vehicle, which is able to restrain sound of exterior of the vehicle (outside of the vehicle) from entering.

[Solution] A vent duct (40) includes an impeller (48) provided in a vehicle body arranged at a position to be able to communicate with an interior space of the vehicle, in which a plurality of blades (48B) are arranged radially, and the impeller (48) is supported to be able to rotate, and an outer cylinder (46), which is provided in the vehicle body, covers a periphery of the impeller (48), and includes at least a pair of an inlet port (50) and an outlet port (52) in an outer peripheral wall (46A) for discharging air of an interior of the vehicle to the exterior of the vehicle.

FIG. 5

EP 2 783 886 A1

## Description

TECHNICAL FIELD

The present invention relates to a vent duct structure for a vehicle.

BACKGROUND ART

In Patent Document 1 (Japanese Utility Model Application Publication No. 60-49009 (JP 60-49009 U)), a ventilating structure is disclosed, in which an impeller is provided to be able to rotate in a ventilating hole formed in a side panel, and air in an interior is discharged to outside of a vehicle from the ventilating hole.

> Patent Document 1: Japanese Utility Model Application Publication No. 60-49009 (JP 60-49009 U)
> Patent Document 2: Japanese Patent Application Publication No. 07-276976 (JP 07-276976 A)

SUMMARY OF THE INVENTION

Problem to be Solved by the Invention

In Patent Document 1, gaps are provided between distal ends of blades of the rotating impeller and an end surface of the side panel, and it is not possible to reduce sound that enters from outside the vehicle unless the gaps between the distal ends of the blades and the end surface of the side panel are reduced to zero. Also, in Patent Document 1, since a thickness of the side panel is small, and there is not much volume at the end surface of the side panel around the impeller, there is no effect of reducing sound that enters from outside of the vehicle.

On the other hand, when the distal ends of the blades are brought into contact with the end surface of the side panel, sliding friction increases, and the impeller does not rotate. Therefore, there is a possibility that ventilation could not work.

The present invention considers the above-mentioned facts and aims to obtain a vent duct structure for a vehicle that is able to restrain sound of exterior of the vehicle (outside the vehicle) from entering.

Means for Solving the Problems

A vent duct structure for a vehicle according to a first aspect of the present invention includes an impeller provided in a vehicle body arranged at a position so as to be able to communicate with an interior space of the vehicle, in which a plurality of blades are arranged radially, and the impeller is supported to be able to rotate, and an outer cylinder, which is provided in the vehicle body, covers a periphery of the impeller, and include at least a pair of an inlet port and an outlet port in an outer peripheral wall for discharging air of an interior of the vehicle to exterior of the vehicle.

A vent duct structure for a vehicle according to a second aspect of the present invention is the vent duct structure for a vehicle according to the first aspect, in which, in at least one of the impeller and the outer cylinder, a wall body is provided, in which an opening arranged at a position facing an air passage part where air passes through, and a closed space communicating with the opening on an opposite side of the air passage part with respect to the opening, are formed.

A vent duct structure for a vehicle according to a third aspect of the present invention is the vent duct structure for a vehicle described in the second aspect, in which the wall body is provided between the neighboring blades of the impeller.

A vent duct structure for a vehicle according to a fourth aspect of the invention is the vent duct structure for a vehicle described in the second aspect, in which a plurality of the wall bodies are provided on an inner periphery side of the outer cylinder.

A vent duct structure for a vehicle according to a fifth aspect of the present invention is the door structure for a vehicle described in any one of the first aspect to the fourth aspect, in which an inlet port side duct and an outlet port side duct are provided in the inlet port and the outlet port of the outer cylinder for controlling a flow of air, the inlet port side duct is attached to be inclined with respect to a position where the inlet port of the outer cylinder is formed, and the outlet port side duct is attached to be inclined with respect to a position where the outlet port of the outer cylinder is formed, and to be inclined on a same side as the inlet port side duct in a vehicle upper-lower direction.

A vent duct structure for a vehicle according to a sixth aspect of the present invention is the door structure for a vehicle described in any one of the first aspect to the fourth aspect, in which an opening and closing body, which is supported so as to be opened by wind when air is discharged, is provided in the outlet port of the outer cylinder.

A vent duct structure for a vehicle according to a seventh aspect of the present invention is the door structure for a vehicle described in the fifth aspect, in which an opening and closing body, which is supported so as to be opened by wind when air is discharged, is provided in a distal end of the outlet port side duct.

According to the vent duct structure for a vehicle of the first aspect of the present invention, the impeller, in which the plurality of blades are arranged radially, is provided in the vehicle body arranged at the position to be able to communicate with the interior space of the vehicle, and the impeller is able to rotate. Further, the outer cylinder that covers the periphery of the impeller is provided in the vehicle body, and at least the pair of the inlet port and the outlet port is provided in the outer peripheral wall of the outer cylinder for discharging air of the interior of the vehicle to the exterior of the vehicle. Thus, when air of the interior passes through the pair of the inlet port and the outlet port, the impeller rotates, and air of the interior of the vehicle is discharged to the exterior of the vehicle. At that time, since the impeller rotates inside the outer cylinder, sound of the exterior of the vehicle passes through a wide room between the blades immediately neighboring with each other, from a narrow passage between a distal end of the blade and an inner wall surface of the outer cylinder, and further passes through the narrow passage between the distal end of the blade and the inner wall surface of the outer cylinder, thereby making it possible to reduce sound. Therefore, it is possible to restrain sound of the exterior of the vehicle from entering the interior.

According to the vent duct structure for a vehicle of the second aspect of the present invention, the wall body is provided in at least one of the impeller and the outer cylinder, and, the opening arranged at the position facing the air passage part, and the closed space communicating with the opening on the opposite side of the air passage part with respect to the opening, are formed in the wall body. Thus, a spring-mass system is structured, in which air in the opening part is a mass, and the closed space behind opening is a spring, and, air in the opening part vibrates strongly when hit by sound at a specific frequency. Therefore, sound energy is changed into vibration energy, and the vibration energy is further changed into thermal energy by viscous resistance and friction of air, thereby reducing sound. Hence, it is possible to expand a frequency range in which sound is reduced.

According to the vent duct structure for a vehicle of the third aspect of the present invention, the wall body is provided between the neighboring blades of the impeller, and it is possible to reduce sound at a specific frequency when sound of the exterior of the vehicle passes through the vicinity of the wall body between the neighboring blades of the impeller.

According to the vent duct structure for a vehicle of the fourth aspect of the present invention, the plurality of wall bodies are provided on the inner periphery side of the outer cylinder, and it is possible to reduce sound at a specific frequency when sound of the exterior of the vehicle passes through the vicinity of the wall bodies on the inner periphery side of the outer cylinder due to rotation of the impeller.

According to the vent duct structure for a vehicle of the fifth aspect of the present invention, the inlet port side duct provided in the inlet port of the outer cylinder is attached to be inclined with respect to the position where the inlet port of the outer cylinder is formed, and the outlet port side duct provided in the outlet port of the outer cylinder is attached to be inclined with respect to the position where the outlet port of the outer cylinder is formed, and to be inclined on the same side as the inlet port side duct in the vehicle upper-lower direction. This makes it possible to create a flow of air in a given direction, so that air of the interior is controlled to flow from the inlet port side duct into the outer cylinder, pass through inside of the outer cylinder, and be discharged from the outlet port side duct, thereby making it possible to regulate a rotational direction of the impeller.

According to the vent duct structure for a vehicle of the sixth aspect of the present invention, the opening and closing body is supported at the outlet port of the outer cylinder so as to be opened by wind when air is discharged. Therefore, since the opening and closing body is opened when air is discharged, and the opening and closing body is closed except when the air is discharged, it is possible to restrain exhaust gas from entering the interior of the vehicle.

According to the vent duct structure for a vehicle of the seventh aspect of the present invention, the opening and closing body is supported at the distal end of the outlet port side duct of the outer cylinder so as to be opened by wind when air is discharged. Therefore, since the opening and closing body is closed except when the air is discharged, and the opening and closing body is opened when air is discharged, it is possible to restrain exhaust gas from entering the interior of the vehicle.

Advantageous Effect of the Invention

According to the vent duct structure for a vehicle of the present invention, it is possible to restrain entrance of sound of the exterior of the vehicle (outside the vehicle).

BRIEF DESCRIPTION OF THE DRAWINGS

[FIG. 1] FIG. 1 is a perspective view showing a rear part of a vehicle, to which a vent duct structure for a vehicle according to a first embodiment is applied, seen from a vehicle outer side;

[FIG. 2] FIG. 2 is a perspective view showing the rear part of the vehicle, to which the vent duct structure for a vehicle according to the first embodiment is applied, seen from a vehicle inner side;

[FIG. 3] FIG. 3 is a perspective view showing the vent duct structure for a vehicle according to the first embodiment, seen from the vehicle outer side;

[FIG. 4] FIG. 4 is a perspective view showing the vent duct structure for a vehicle shown in FIG. 3, seen from the vehicle inner side;

[FIG. 5] FIG. 5 is a vertical sectional view of the vent duct structure for a vehicle shown in FIG. 3;

[FIG. 6] FIG. 6 is a partial sectional view explaining a sound reduction effect by blades of an impeller and an outer cylinder used in the vent duct structure for a vehicle shown in FIG. 3;

[FIG. 7] FIG. 7 is a modeled structural view for explaining the sound reduction effect shown in FIG. 6;

[FIG. 8] FIG. 8 is a graph showing a relation between frequencies and the sound reduction effect;

[FIG. 9] FIG. 9 is a structural view corresponding to FIG. 7 for explaining a reason why there is a frequency at which sound is not reduced;

[FIG. 10] FIG. 10 is a partial sectional view showing the impeller for expanding a frequency range in which sound is reduced;

[FIG. 11] FIG. 11 is a graph showing a relation between frequencies and the sound reduction effect by the impeller shown in FIG. 10;

[FIG. 12] FIG 12 is a schematic sectional view showing wall bodies in the impeller, which form openings, and closed spaces communicating with the openings;

[FIG. 13] FIG. 13 is a view showing a spring-mass system made by the opening and the closed space behind the opening shown in FIG. 12;

[FIG. 14] FIG. 14 is a graph showing a relation between frequencies and the sound reduction effect;

[FIG. 15] FIG. 15 is a vertical sectional view showing a vent duct structure for a vehicle according to a second embodiment;

[FIG. 16] FIG 16 is a vertical sectional view showing a vent duct structure for a vehicle according to a third embodiment;

[FIG. 17] FIG. 17 is a vertical sectional view showing a vent duct structure for a vehicle according to a forth embodiment;

[FIG. 18] FIG. 18 is a vertical sectional view showing a vent duct structure for a vehicle according to a fifth embodiment;

[FIG. 19] FIG. 19 is a vertical sectional view showing a vent duct structure for a vehicle according to a first comparative example;

[FIG. 20] FIG. 20 is a perspective view showing a state where an opening and closing body of a vent duct structure for a vehicle according to a second comparative example is closed, seen from an vehicle outer side;

[FIG. 21] FIG. 21 is a perspective view showing a state where the opening and closing body of the vent duct structure for a vehicle according to the second comparative example is open, seen from the vehicle outer side; and

[FIG. 22] FIG. 22 is a vertical sectional view showing the vent duct structure for a vehicle according to the second comparative example.

## MODES FOR CARRYING OUT THE INVENTION

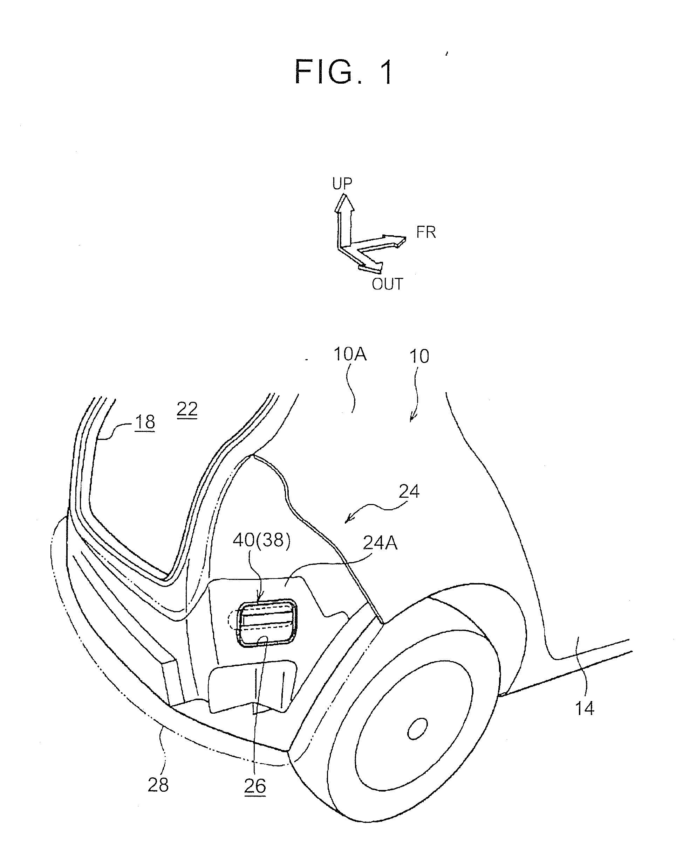

A first embodiment of a vent duct structure for a vehicle according to the present invention is explained below by using FIG. 1 to FIG. 14. An arrow FR shown as appropriate in these drawings indicates a front side of a vehicle, an arrow UP indicates an upper side of a vehicle, and an arrow OUT indicates an outer side in a vehicle width direction.

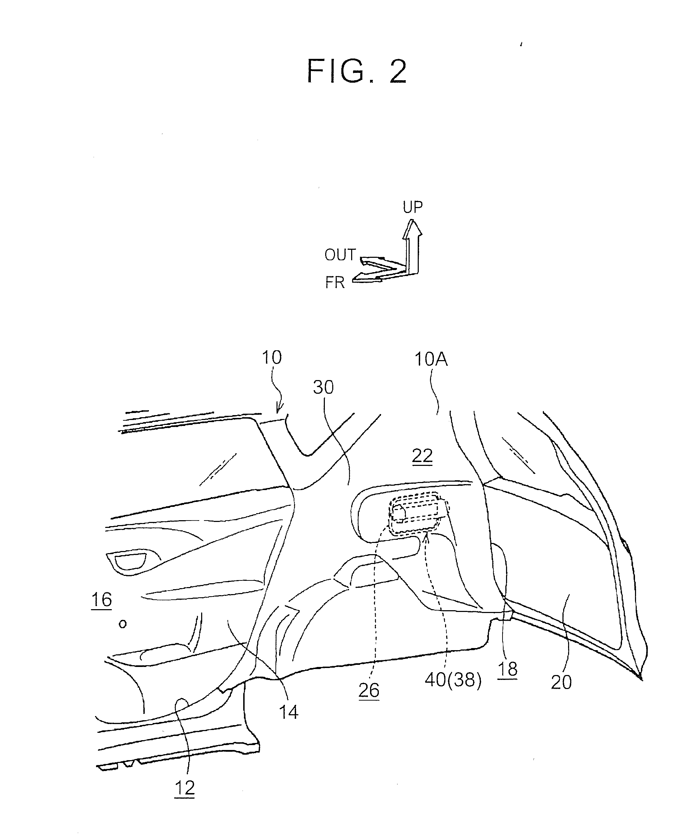

FIG. 1 shows a rear part of a vehicle, to which a vent duct structure for a vehicle according to the first embodiment is applied, in a perspective view from a vehicle outer side. FIG. 2 shows the rear part of the vehicle, to which the vent duct structure for a vehicle according to the first embodiment is applied, in a perspective view from a vehicle inner side. As shown in FIG. 1 and FIG. 2, a side door opening 12 is formed on both left and right side surfaces of a rear part 10A of a vehicle 10, and, as a side door 14 provided in the side door opening 12 is opened and closed, inside of a vehicle compartment 16 (an interior) can be opened and closed (FIG. 1 and FIG. 2 only show one side surface of the rear part 10A of the vehicle 10). A back door opening 18 (see FIG. 2) is formed in a rear end surface of the rear part 10A of the vehicle 10, and, as a back door 20 (see FIG. 2) provided in the back door opening 18 is opened and closed, inside of a luggage room 22 (the interior) can be opened and closed. An air conditioner (not shown) is provided in the vehicle 10, and the air conditioner is designed to adjust, for example, temperature of air from exterior of the vehicle 10 (outside of the vehicle), and send the air into the vehicle compartment 16.

In the rear part 10A of the vehicle 10, an inner plate 24A and an outer plate 24 are provided as a vehicle body arranged on a side part of the luggage room 22 (an interior space). In the inner plate 24A, a rectangular opening 26 is formed in a rear end part of a side surface of the vehicle 10, and the opening 26 communicates with inside of the luggage room 22 (the interior space) of the vehicle 10. A vent duct 40, to which the vent duct structure for a vehicle 38 according to this embodiment is applied, is attached to the opening 26 of the inner plate 24A. In short, a combination of the inner plate 24A and the outer plate 24 is regarded as a "vehicle body".

In a lower part of the outer plate 24 of the vehicle 10 and an vehicle outer side of the inner plate 24A, a bumper cover 28 is attached as an exterior member so as to cover the opening 26 and the vent duct 40 (see FIG. 1). Further, inside of the luggage room 22 of the vehicle 10, the opening 26 and the vent duct 40 are structured to be hidden by a deck side trim 30 serving as an interior material (see FIG. 2).

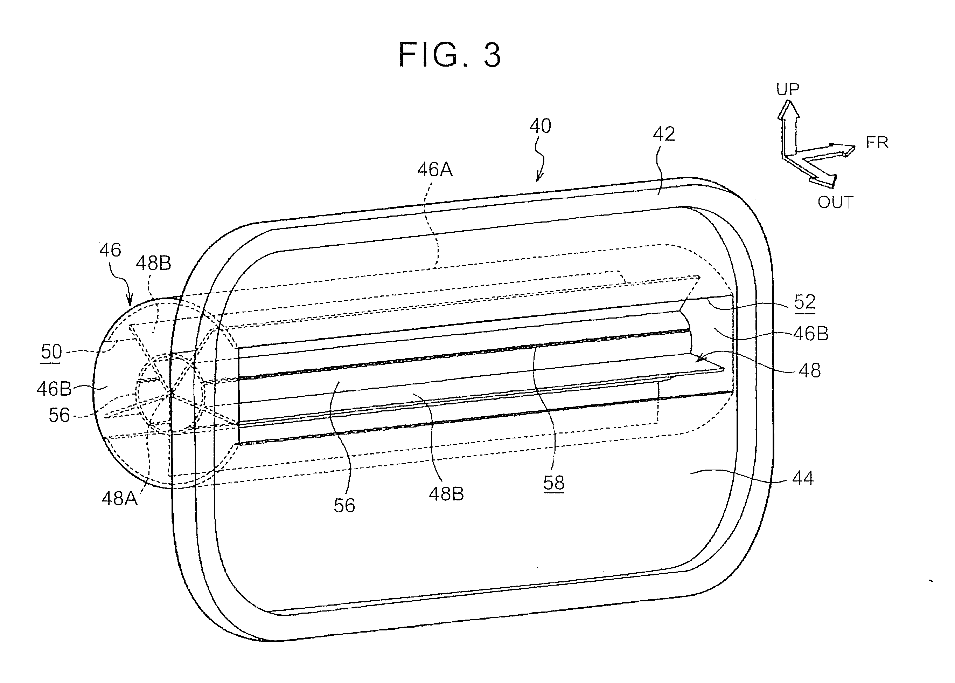

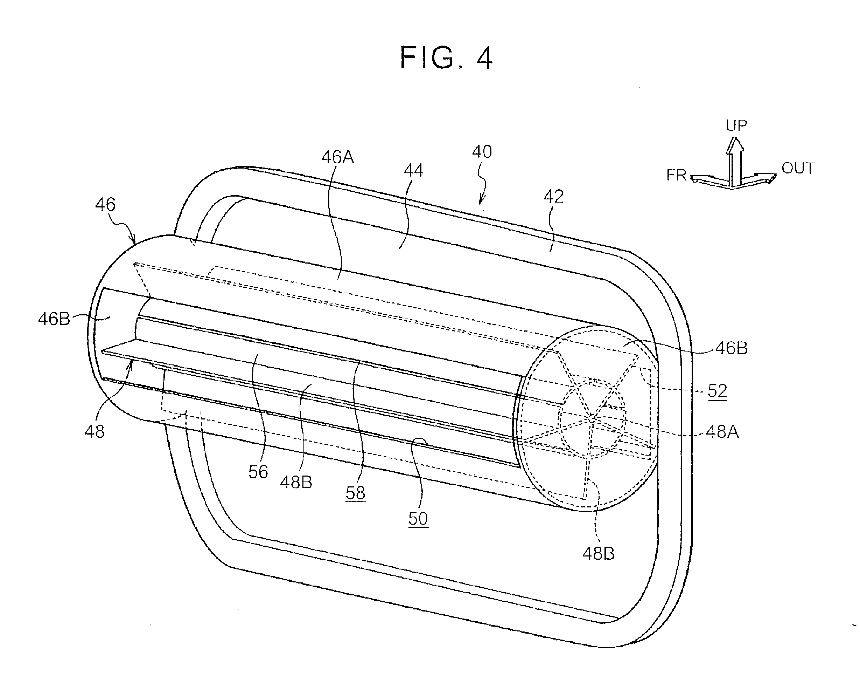

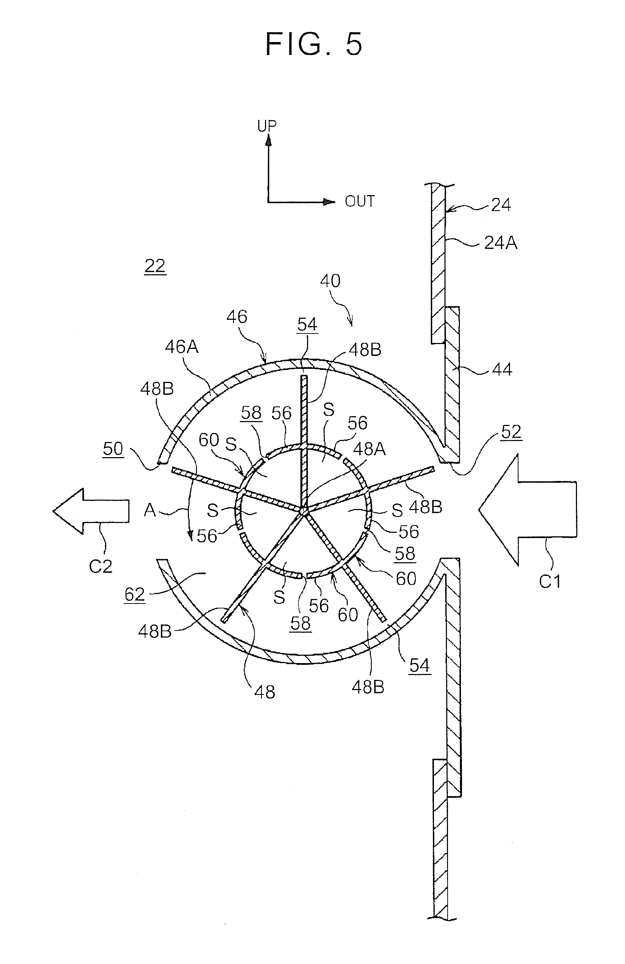

FIG. 3 shows the vent duct 40 in a perspective view from the vehicle outer side, and FIG. 4 shows the vent duct 40 in a perspective view from the vehicle inner side. Also, FIG. 5 shows the vent duct 40 in a vertical sectional view. As shown in FIG. 3 to FIG. 5, the vent duct 40 includes a rectangular frame body 42 attached to the opening 26 of the inner plate 24A (see FIG. 1), a plate material 44 fixed to an inner side of the frame body 42, a generally cylindrical outer cylinder 46, a part of an outer peripheral surface of which is attached to an upper part side of the plate material 44 along a vehicle front-rear direction, and an impeller 48 arranged inside the outer cylinder 46.

The outer cylinder 46 is provided on an inner side of the plate material 44 in the vehicle width direction. The outer cylinder 46 includes a generally cylindrical outer peripheral wall 46A arranged so that the vehicle front-rear direction is a longitudinal direction (an axis direction) thereof, and side walls 46B made of plate materials that block both end parts of the outer peripheral wall 46A in the longitudinal direction. The outer cylinder 46 is provided across almost entire length of the plate material 44 in the vehicle front-rear direction, and an outlet port 52, made of a rectangular opening, is formed along the vehicle front-rear direction in a part where the outer peripheral wall 46A of the outer cylinder 46 and the plate material 44 are connected with each other. In the outer peripheral wall 46A of the outer cylinder 46, an inlet port 50 made of a rectangular opening is formed along the vehicle front-rear direction at a position facing the outlet port 52 (a position on the opposite side of the outlet port 52). In short, in the outer peripheral wall 46A of the outer cylinder 46, the pair of inlet port 50 and the outlet port 52 is provided for discharging air of the interior of the vehicle 10 to exterior of the vehicle 10 (outside of the vehicle).

The impeller 48 includes a shaft part 48A arranged along the vehicle front-rear direction, and a plurality of blades 48B formed radially around the shaft part 48A. In this embodiment, five blades 48B are provided. The outer peripheral wall 46A of the outer cylinder 46 is arranged so as to cover the impeller 48, and gaps 54 are provided between distal ends of the blades 48B and an inner surface of the outer peripheral wall 46A (see FIG. 5). The shaft part 48A is supported to be able to rotate by bearings (not shown) formed in the side walls 46B of the outer cylinder 46, and is structured to be rotated by a flow of air discharged from the luggage room 22 side of the vehicle 10 (the interior side) to the exterior side (outside of the vehicle).

As shown in FIG. 5, in a vehicle side view, curved wall parts 56 are provided between the neighboring blades 48B in the impeller 48 so as to be bridged between middle parts of the blades 48B in a protruding direction. The wall parts 56 are arranged in a generally cylindrical shape around the shaft part 48A in the vehicle side view. Openings (through holes) 58, which go through the wall parts 56, are formed in middle parts of the wall parts 56 in a circumferential direction. In this embodiment, the openings 58 are slits arranged along the vehicle front-rear direction. In short, the openings 58 are arranged at positions facing the air passage parts 62 (see FIG. 5) through which air passes, and, closed spaces S surrounded by wall bodies 60 made of the wall parts 56 and the neighboring blades 48B on both sides of the wall parts 56 are formed behind the openings 58 (on the opposite sides of the air passage parts 62). In other words, the impeller 48 includes the wall bodies 60, in which the openings 58 arranged at positions facing the air passage parts 62, and the closed spaces S communicating with the openings 58 behind the openings 58 (on the opposite sides of the air passage parts 62), are formed between the neighboring blades 48B.

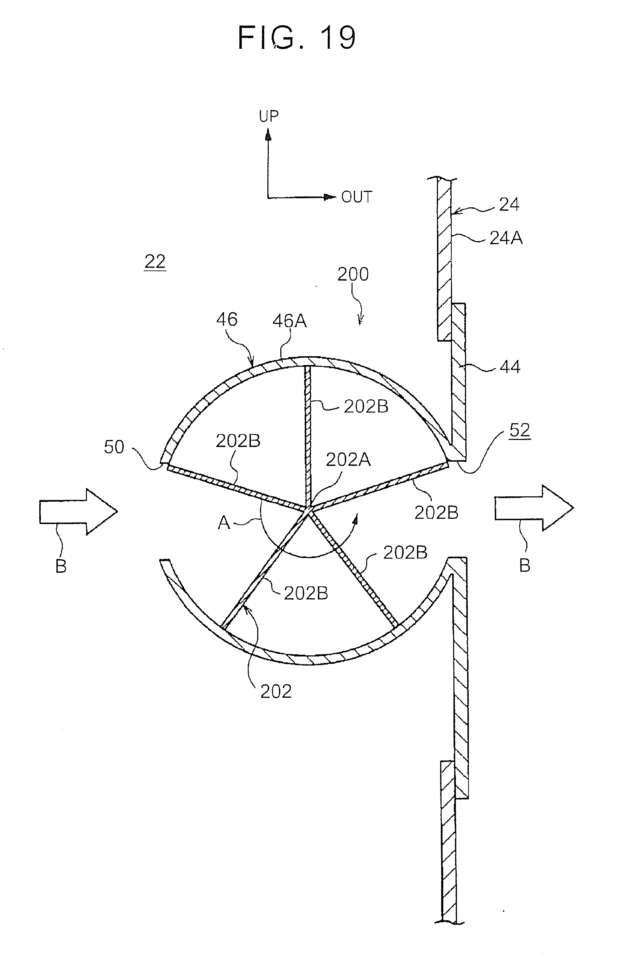

FIG. 19 shows a vent duct 200, to which a vent duct structure for a vehicle according to a first comparative example is applied, in a vertical sectional view. As shown in FIG. 19, in the vent duct 200, an impeller 202 is provided inside an outer cylinder 46, and the impeller 202 includes a plurality of (for example, in this comparative example, five) blades 202B arranged radially around a shaft part 202A. Distal ends of the plurality of blades 202B are in contact with an outer peripheral wall 46A of the outer cylinder 46.

In this vent duct 200, as the impeller 202 rotates in an arrow A direction, air of an interior (inside of a luggage room 22) enters the impeller 202 inside the outer cylinder 46, and the air goes through to outside of a vehicle (see an arrow B). Because the distal ends of the blades 202B are in contact with the outer peripheral wall 46A of the outer cylinder 46, it is possible to restrain sound of outside of the vehicle from entering the interior. However, in reality, when the distal ends of the plurality of blades 202B of the impeller 202 come into contact with the outer peripheral wall 46A of the outer cylinder 46, it becomes difficult for the impeller 202 to rotate due to sliding friction, and air of the interior may not be discharged smoothly. Further, abnormal sound such as rubbing sound may be generated at contact parts between the distal ends of the plurality of blades 202B and the outer peripheral wall 46A of the outer cylinder 46.

On the other hand, as shown in FIG. 5, in the vent duct 40 according to this embodiment, by providing the gaps 54 between the distal ends of the plurality of blades 48B of the impeller 48 and the inner surface of the outer peripheral wall 46A, the impeller 48 rotates smoothly, for example, in an arrow A direction, and no abnormal sound such as rubbing sound is generated. In addition, in the vent duct 40 according to this embodiment, even if there are the gaps 54 between the distal ends of the plurality of blades 48B of the impeller 48 and the inner surface of the outer peripheral wall 46A, it is possible to reduce sound that enters from outside of the vehicle. A principle of reducing sound from outside of the vehicle is explained below.

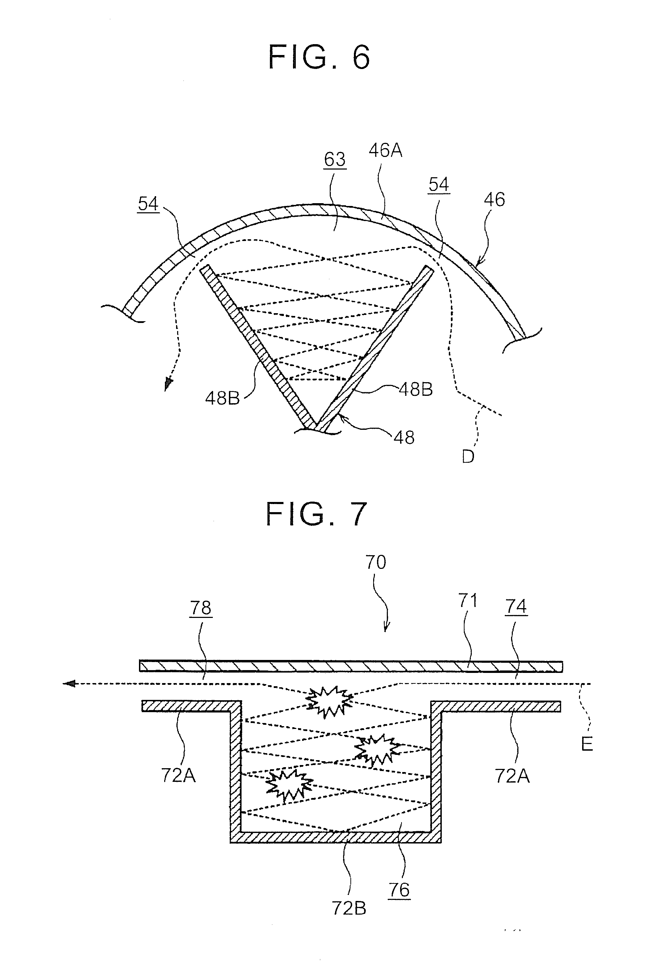

FIG. 6 shows a state where sound passes in the vicinity of the blades 48B of the impeller 48 and the outer peripheral wall 46A of the outer cylinder 46 in a schematic sectional view. FIG. 6 shows a state where noise passes in a case where there is no wall body 60 (see FIG. 5). As shown in FIG. 6, noise outside a vehicle passes through the narrow gap (passage) 54 between the distal end of the blade 48B and the inner wall surface of the outer peripheral wall 46A, passes through a wide room 63 between the blades 48B immediately neighboring with each other, and further passes through the narrow gap (passage) 54 between the distal end of the blade 49B and the inner wall surface of the outer peripheral wall 46A, as shown by an arrow D. At this time, inside the wide room 63 between the neighboring blades 48B, noise is reflected by wall surfaces of the blades 48B, thereby causing acoustic wave interference.

More specific explanation is given in a modeled expansion type silencer 70 shown in FIG. 7. As shown in FIG. 7, once noise enters inside a wide expansion room 76 between a wall 71 and a recessed part 72B from a narrow passage 74 between the wall 71 and a wall 72A, the noise is reflected by a wall of the expansion room 76 as shown by an arrow E, thereby causing acoustic wave interference, and cancelling sound. Thus, reduced noise comes out form the narrow passage 78 between the wall 71 and the wall 72A.

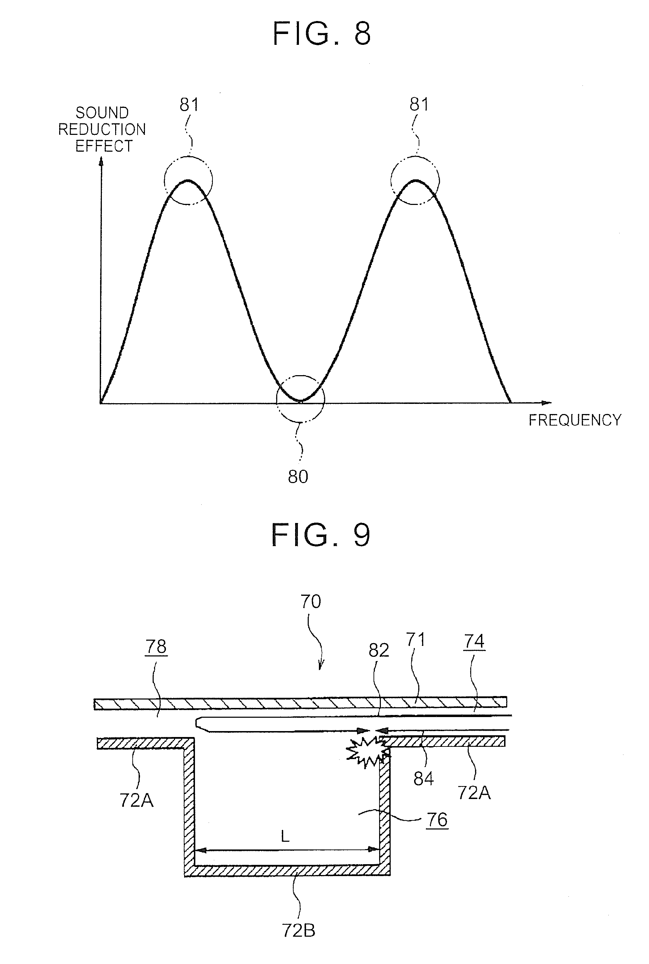

FIG. 8 shows a graph of a relation between frequencies and a sound reduction effect by the expansion type silencer 70. As shown in FIG. 8, in the expansion type silencer 70, it is possible to reduce sound at a specific frequency (see a region 81), but no sound reduction effect is observed depending on a frequency as shown in a region 80. In short, there is a frequency at which sound is hardly reduced.

The reason why there is a frequency that causes no reduction is explained here. In the expansion type silencer 70 shown in FIG. 9, a length of the expansion room 76 from the passage 72 to the passage 78 is L, and a wavelength is $\lambda$. As shown in FIG. 9, when sound 82 that enters the expansion room 76 first collides with sound 84 that enters later, the sounds become "0" if phases of the two sounds 82, 84 are inverted at 180 degrees, and a reduction effect is maximized. In short, a condition of a frequency that produces the maximum reduction effect is Equation 1. This corresponds to the region 81 in the graph shown in FIG. 8.

$$2L = \lambda/2 \times 2n \quad \text{(Equation 1)}$$

Here, n = 1, 2, 3, 4, 5.... In short, 2n is an even number.

When the sound 82 that enters the expansion room 76 first collides with the sound 84 that enters later, the sounds are not cancelled if the phases of the two sounds 82, 84 are the same (0°), and the reduction effect becomes 0. In short, a condition of a frequency that does not cause a reduction is Equation 2. This corresponds to the region 80 in the graph shown in FIG. 8.

$$2L = \lambda/2 \times (2n - 1) \quad \text{(Equation 2)}$$

Here, n = 1, 2, 3, 4, 5.... In short, (2n - 1) is an odd number.

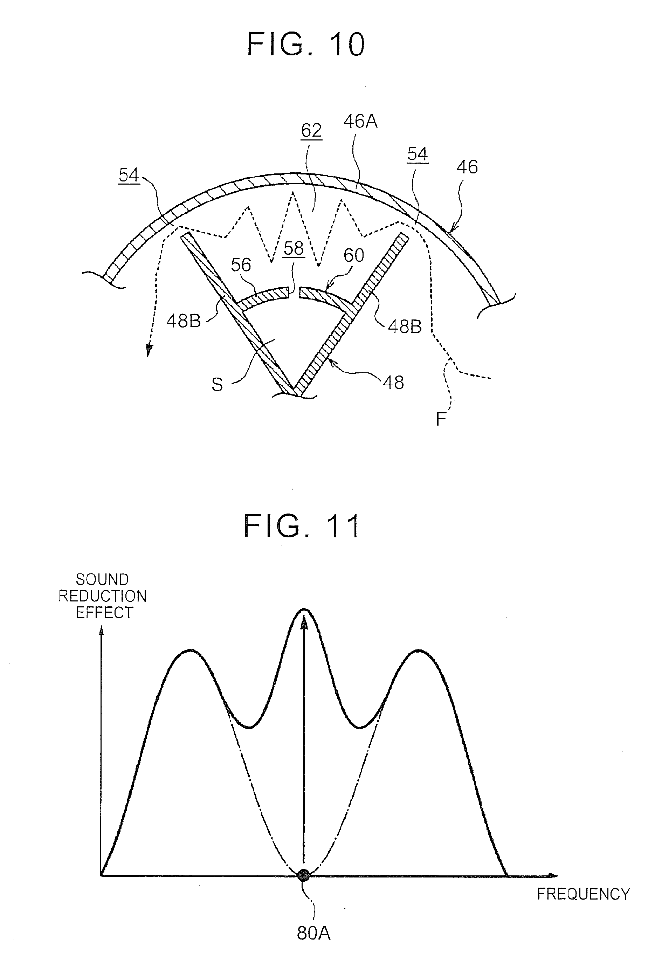

FIG. 10 shows a state where noise passes through the vicinity of the wall body 60 between the blades 48B of the impeller 48 according to this embodiment in a schematic sectional view. The impeller 48 is provided with the wall body 60 between the neighboring blades 48B. The wall body 60 includes the opening 58 formed in the middle part of the wall part 56 arranged along the circumferential direction, and the closed space S formed behind the opening 58. Thus, as shown in FIG. 11, it is possible to eliminate a dropping spot 80A of a frequency that causes no reduction, and obtain a reduction effect in a wide range of frequencies.

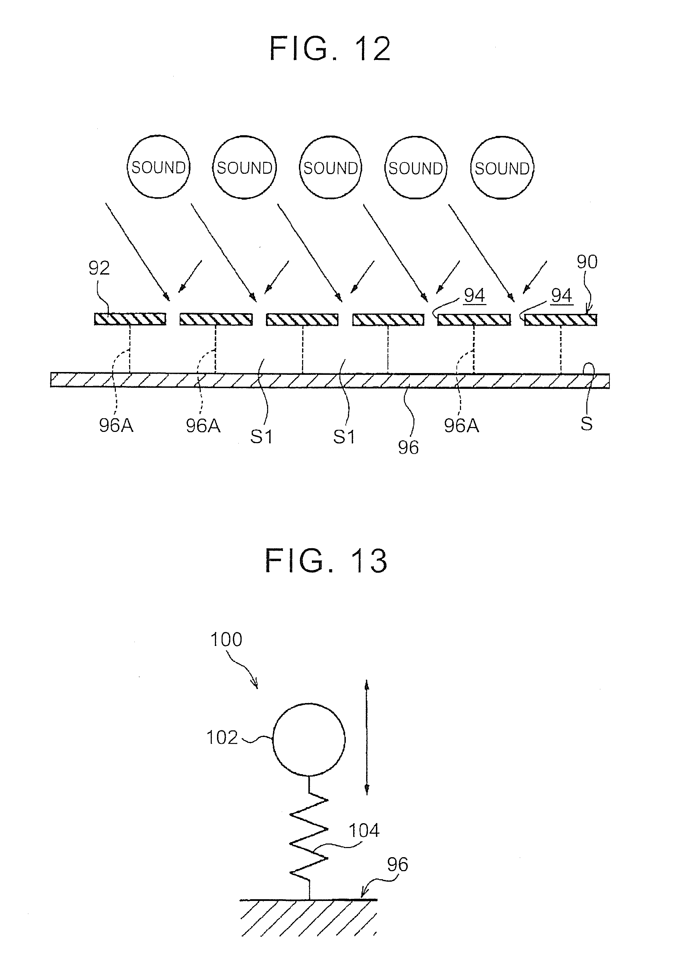

The sound reduction effect by the opening 58 and the closed space S is explained here. FIG. 12 shows the wall body 90 in a schematic sectional view. As shown in FIG. 12, the wall body 90 includes a wall part 92 in which a plurality of through holes 94 are formed, and the closed spaces S surrounded by the wall part 92 and a wall part 96 behind the through holes 94. In the closed space S of the wall body 90, a hypothetical wall 96A is arranged between the neighboring through holes 94 in a direction orthogonal to a wall surface of the wall part 92. With these hypothetical walls 96A, spaces S1 that respectively communicate with the through holes 94 are formed behind the wall part 92.

In such a wall body 90, as shown in FIG. 12 and FIG. 13, a one degree of freedom spring-mass system 100 is structured, in which air in the through hole 94 part formed in the wall part 92 is a mas 102, and the space S 1 made by the wall part 92, the wall part 96, and a hypothetical wall 96A behind the wall part 92 is a spring 104. In this one degree of freedom spring-mass system 100, when sound at a specific frequency hits the mass 102 of air in the through hole 94 part, the mass 102 vibrates strongly in an expansion and contraction direction (an arrow direction) of the spring 104. Thus, sound energy is changed into vibrational energy, and the vibrational energy is further changed into thermal energy by viscous resistance and friction of air, thereby strikingly reducing sound at the specific frequency.

Here, a sound reduction frequency f is expressed by the following equation where a length of the through hole 94 in a penetrating direction (a thickness in the penetrating direction) is 1, an area of the through hole 94 is S, a volume of the space S1 behind the through hole 94 is V, sound speed is c, and a correction value at an end of the through hole is Δ1. Once air in the through hole 94 vibrates, the correction value Δ1 at the end of the through hole corrects vibration of surrounding air because air has viscosity and tends to drag surrounding air.

[Mathematical 1]

$$f = \frac{c}{2\pi} \sqrt{\frac{S}{(\ell + \Delta\ell)V}}$$

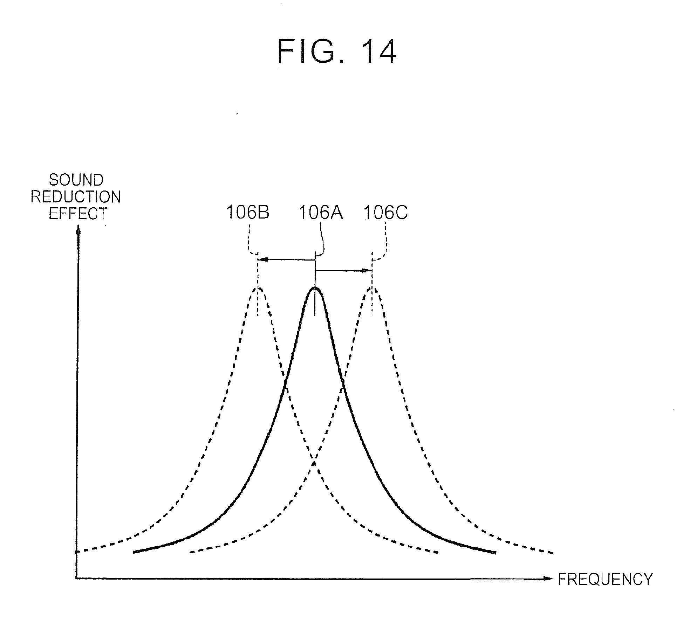

As expressed in this formula, a frequency that produces a sound reduction effect is decided by a size of the through hole 94, and a volume (capacity) of the space S 1 behind the through hole 94. In FIG. 14, a graph showing a relation between frequencies and the sound reduction effect is shown. As shown in FIG. 14, in a case where the one degree of freedom spring-mass system 100 resonates (at a specific frequency), sound is dramatically reduced. Further, as shown in FIG. 14, by changing the size of the through hole 94 and the volume (capacity) of the space S1 behind the through hole 94, frequencies 106A, 106B, and 106C that produce the sound reduction effect are changed.

In FIG. 12, although the plurality of through holes 94 are formed in the wall part 92, the sound reduction effect is almost the same even when one opening 58 is formed (see FIG. 5).

As shown in FIG. 5, in the vent duct 40 according to this embodiment, by providing the gaps 54 between the distal ends of the plurality of blades 48B of the impeller 48 and the inner surface of the outer peripheral wall 46A, the impeller 48 rotates smoothly. As the impeller 48 rotates, for example, in the arrow A direction, air of the interior (inside the luggage room 22) enters and passes through the impeller 48 inside the outer cylinder 46, and the air is thus discharged to outside the vehicle. For example, when a door (the side door 14 or the back door 20) of the vehicle 10 is closed, since air of the interior is discharged to the outside the vehicle from the vent duct 40, it does not become difficult to close the door. In addition, in a case where an air conditioner (not shown) is set to outside air circulation, air taken in the interior from the front of the vehicle 10 passes through the vent duct 40 to outside the vehicle, thereby restraining an increase in interior pressure.

In the vent duct 40 according to this embodiment, sound outside the vehicle passes through the narrow gap (passage) 54 between the distal end of the blade 48B of the impeller 48 and the inner wall surface of the outer peripheral wall 46A, passes through the wide room (the air passage part 62) between the blades 48B immediately neighboring with each other, and further passes through the narrow gap (passage) 54 between the distal end of the blade 48B and the inner wall surface of the outer peripheral wall 46A. At this time, acoustic wave interference is caused inside the wide room (the air passage part 62) between the neighboring blades 48B, and sound is reduced. Therefore, as shown by arrows C1, C2, even if sound outside the vehicle enters from the outlet port 52 of the outer cylinder 46, since the sound passes through between the neighboring blades 48B of the impeller 48 inside of the outer cylinder 46, sound entering the inlet port 50 of the outer cylinder 46 is reduced.

Further, between the neighboring blades 48B of the impeller 48, the wall body 60 is provided, which includes the opening 58 facing the air passage part 62, and the closed space S behind the opening 58. Therefore, the one degree of freedom spring-mass system 100 is structured (see FIG. 13), and sound at a specific frequency is dramatically reduced. Thus, it is possible to expand a frequency range in which sound is reduced.

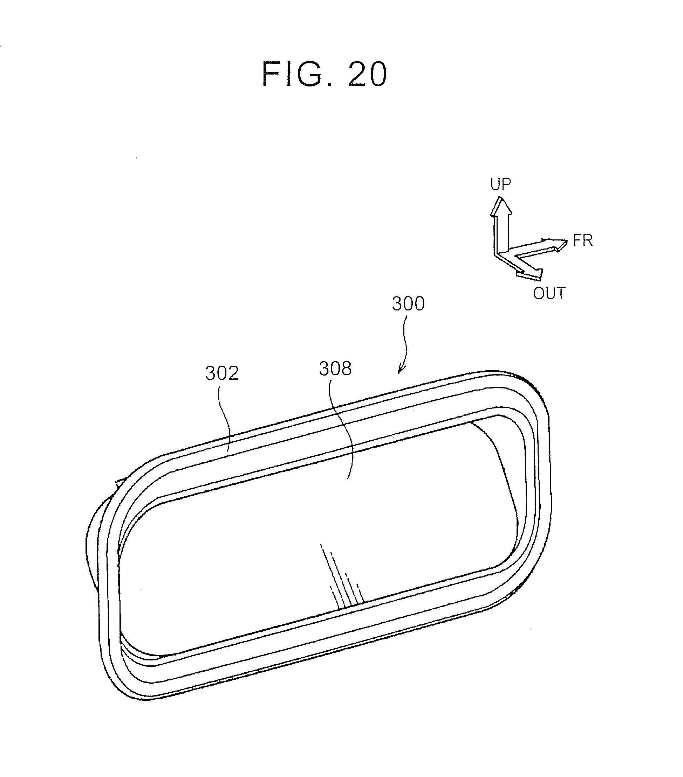

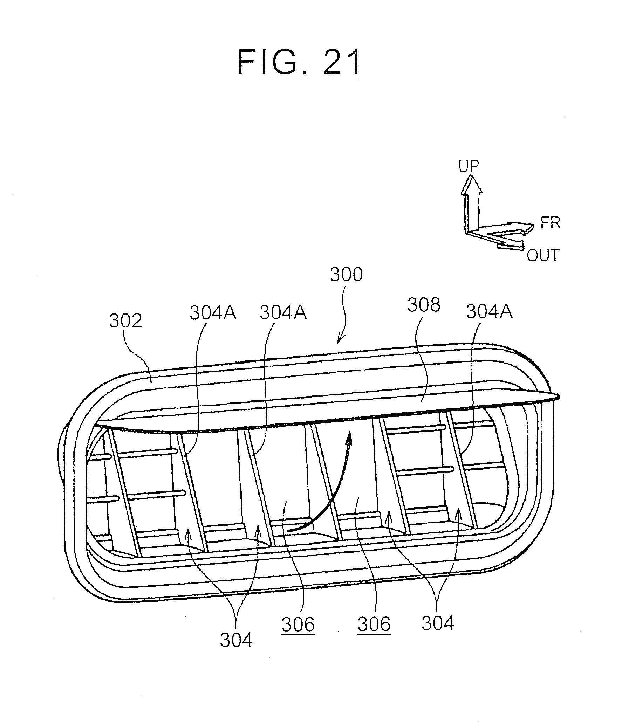

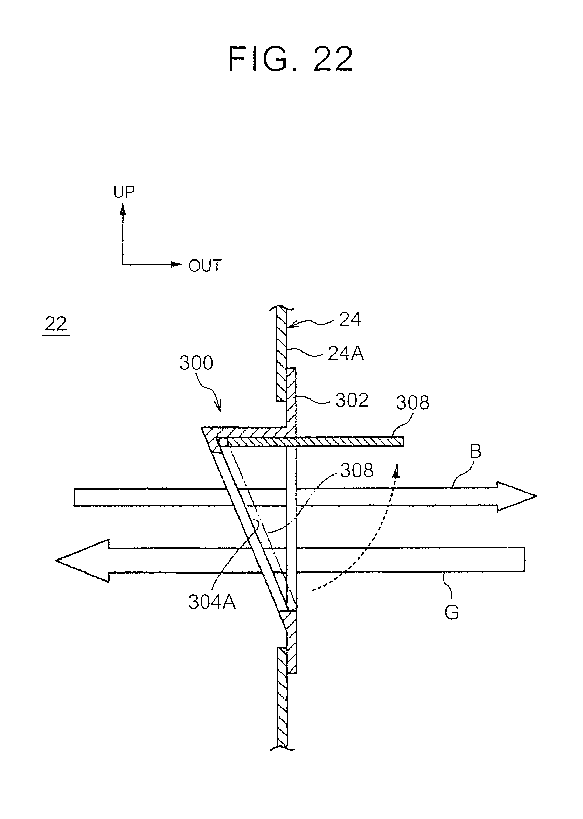

FIG. 20 to FIG. 22 show a vent duct 300, to which a vent duct structure for a vehicle according to a second comparative example is applied. As shown in FIG. 20 to FIG. 22, in the vent duct 300, a plurality of plate materials 304 are arranged at intervals in a vehicle front-rear direction inside a frame body 302, and air passage parts 306 are formed between the plurality of plate materials 304 (see FIG. 21). An end surface 304A on an outer side of the plate material 304 in a vehicle width direction is inclined so that a lower end part thereof is arranged on an outer side of an upper end part thereof in the vehicle width direction. On an upper part side of the frame body 302, a plate-shaped opening and closing body 308 is supported by non-illustrated hinges so as to be able to open and close. The opening and closing body 308 abuts on the end surfaces 304A of the plate materials 304 when closed, and the opening and closing body 308 turns to an outer side of the vehicle and is opened by wind when air is discharged from the interior to outside the vehicle as shown by an arrow B (see FIG. 22). The opening and closing body 308 is formed of a thin rubber plate or the like.

In this vent duct 300, the opening and closing body 308 is closed when the vehicle is stopped, and the opening and closing body 308 is opened when the vehicle is running, due to a flow of air discharged to outside the vehicle. In short, since the opening and closing body 308 is closed when the vehicle is idling, exhaust gas and so on is restrained from entering from the vent duct 300 near an exhaust port (not shown).

However, when the opening and closing body 308 is open, noise outside a vehicle such as tire noise and exhaust sound might enter the interior as shown by an arrow G (see FIG. 22). Therefore, a sound insulating material (not shown) is pasted on a back side of an interior par near the vent duct 300 inside the vehicle, and absorbs sound that enters the vehicle. However, in the method of absorbing sound by the sound insulating material after sound enters from the vent duct 300, an effect of reducing noise is small. Also, a large amount of sound insulating material must be used in order to increase the effect, which causes a cost increase.

On the other hand, in the vent duct 40 according to this embodiment, by proving the impeller 48 inside the outer cylinder 46 having the inlet port 50 and the outlet port 52, it is possible to restrain noise outside the vehicle from entering the interior. Therefore, it is possible to achieve both discharge of air from the interior to outside the vehicle, and restraint of entrance of noise outside the vehicle. Further, in order to restrain entrance of noise outside the vehicle into the interior itself, the effect is larger than that of the sound insulating material, and costs can be reduced.

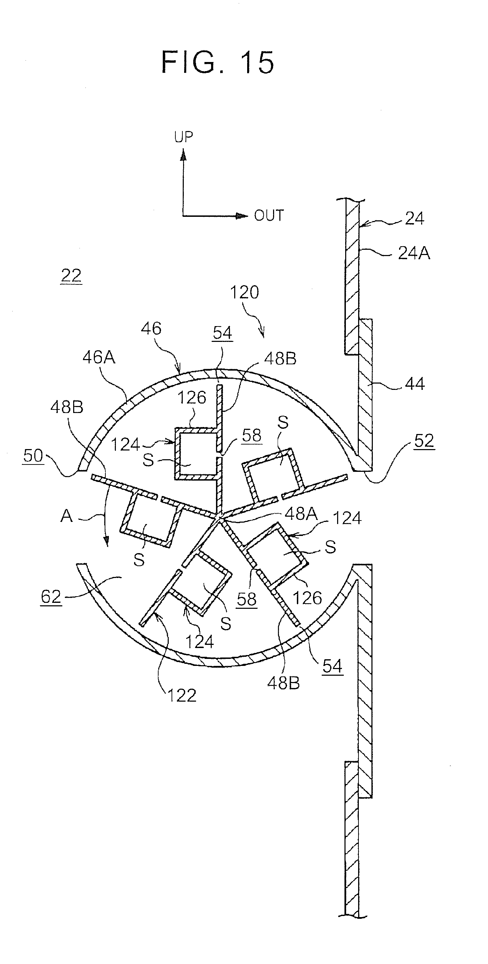

Next, a vent duct 120, to which a vent duct structure for a vehicle according to a second embodiment is applied, is explained by using FIG. 15. The same reference numerals are given to component parts same as those in the first embodiment, and explanation thereof is omitted.

As shown in FIG. 15, in the vent duct 120, an impeller 122 is arranged inside an outer cylinder 46. In the impeller 122, wall bodies 124 are provided, which include openings 58 formed in middle parts of a plurality of blades 48B in a protruding direction, and wall parts 126 having a generally U-shaped section and formed so as to protrude from wall surfaces of the blades 48B behind the openings 58 (on an opposite side of an air passage part 62) in a vehicle side view. In other words, the wall body 124 includes the opening 58 arranged at a position facing the air passage part 62, and a closed space S surrounded by the blades 48B and the wall part 126 behind the opening 58. Each of the wall bodies 124 is provided on a wall surface side of one of the neighboring blades 48B.

In such a vent duct 120, gaps 54 are provided between distal ends of the plurality of blades 48B of the impeller 122 and an inner wall surface of an outer peripheral wall 46A, and the impeller 122 rotates smoothly. As the impeller 122 rotates, for example, in an arrow A direction, air in the interior (inside a luggage room 22) enters and passes through the impeller 122 inside the outer cylinder 46, and air is thus discharged outside a vehicle.

Moreover, in the vent duct 120, sound outside the vehicle passes through the narrow gap (passage) 54 between the distal end of the blade 48B of the impeller 122 and the inner wall surface of the outer peripheral wall 46A, passes through a wide room (the air passage part 62) between the blades 48B immediately neighboring with each other, and further passes through the narrow gap (passage) 54 between the distal end of the blade 48B and the inner wall surface of the outer peripheral wall 46A, thereby causing acoustic wave interference and reducing sound.

Further, the wall body 124, which includes the opening 58 facing the air passage part 62, and the closed space S behind the opening 58, is provided on a wall surface side of one of the neighboring blades 48B of the impeller 122, and a one degree of freedom spring-mass system 100 is structured (see FIG. 13). Hence, sound at a specific frequency is remarkably reduced, and it is possible to expand a frequency range in which sound is reduced.

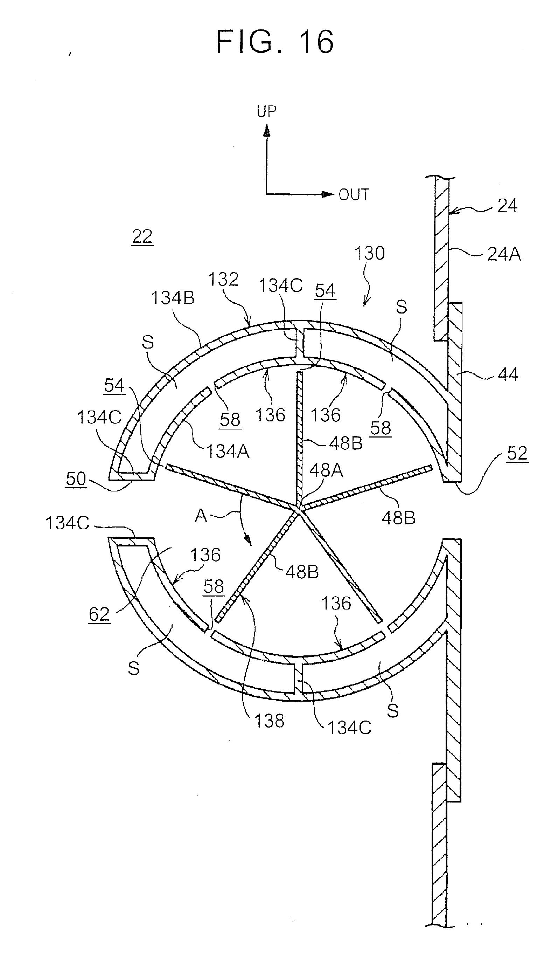

Next, a vent duct 130, to which a vent duct structure for a vehicle according to a third embodiment is applied, is explained by using FIG. 16. The same reference numerals are given to component parts same as those in the first embodiment and the second embodiment, and explanation thereof is omitted.

As shown in FIG. 16, in the vent duct 130, an impeller 138 is arranged inside an outer cylinder 132. In the impeller 138, a plurality of (in this embodiment, five) blades 48B are radially provided around a shaft part 48A. The outer cylinder 132 includes a generally cylindrical peripheral wall 134A covering a periphery of the impeller 138, an outer peripheral wall 134B arranged around the peripheral wall 134A at a given interval from the peripheral wall 134A, and wall parts 134C that connect the peripheral wall 134A and the outer peripheral wall 134B with each other. In a vehicle side view, an opening 58 is formed in a middle part of the peripheral wall 134A in a circumferential direction, and a closed space S is formed behind the opening 58 (on an opposite side of an air passage part 62) and surrounded by the peripheral wall 134A, the wall part 134C (and a plate material 44), and the outer peripheral wall 134B. In short, in the outer cylinder 132, a plurality of wall bodies 136 are provided, which include the openings 58 arranged at positions facing the air passage parts 62, and the closed spaces S communicating with the openings 58 behind the openings 58. In this embodiment, four of the wall bodies 136, which include the openings 58 and the closed spaces S communicating the openings 58, are provided on an inner periphery side of the outer cylinder 132. Further, a pair of inlet port 50 and an outlet port 52 is provided in the outer cylinder 132 in order to discharge air of the interior (inside a luggage room 22) to outside the vehicle.

In such a vent duct 130, gaps 54 are provided between distal ends of the plurality of blades 48B of the impeller 138 and an inner wall surface of the peripheral wall 134A, and the impeller 138 rotates smoothly. As the impeller 138 rotates, for example, in an arrow A direction, air of the interior (inside the luggage room 22) enters and passes through the impeller 138 inside the outer cylinder 132, and air is thus discharged outside the vehicle.

Moreover, in the vent duct 130, sound outside the vehicle passes through the narrow gap (passage) 54 between the distal end of the blade 48B of the impeller 138 and the inner wall surface of the peripheral wall 134A, passes through a wide room (the air passage part 62) between the blades 48B immediately neighboring with each other, and further passes through the narrow gap (passage) 54 between the distal end of the blade 48B and the inner wall surface of the peripheral wall 134A, thereby causing acoustic wave interference and reducing sound.

Further, on an inner periphery side of the outer cylinder 132, the plurality of wall bodies 136 are provided, which include openings 58 facing the air passage parts 62 and the closed spaces S behind the openings 58, and, a one degree of freedom spring-mass system 100 is structured (see FIG. 13). Thus, sound at a specific frequency is reduced remarkably, and it is possible to expand a frequency range in which sound is reduced.

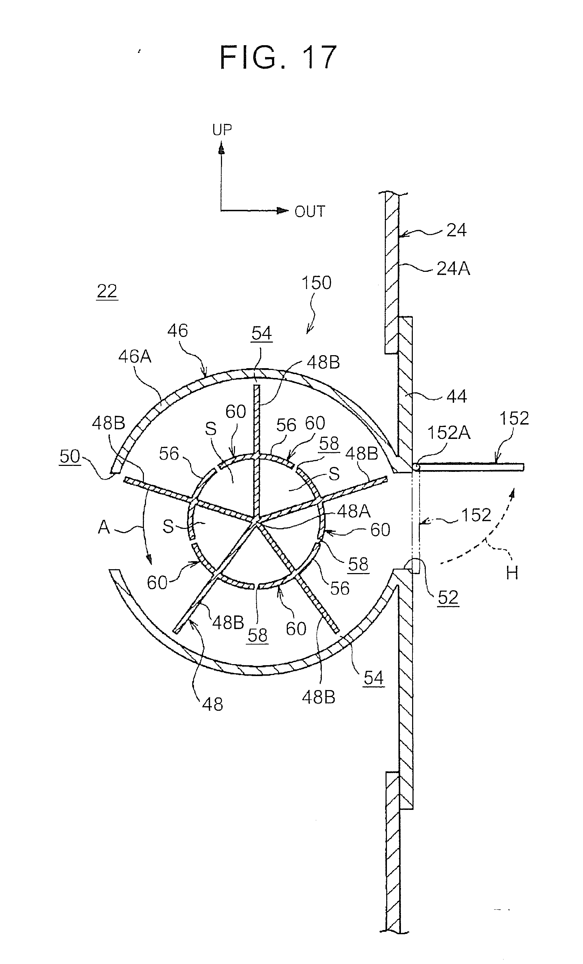

Next, a vent duct 150, to which a vent duct structure for a vehicle according to a fourth embodiment is applied, is explained by using FIG. 17. The same reference numerals are given to component parts same as those in the first to third embodiments, and explanation thereof is omitted.

As shown in FIG. 17, in the vent duct 150, a plate-shaped opening and closing body 152 is provided in an outlet port 52 of an outer cylinder 46. An upper part 152A of the opening and closing body 152 is supported to be able to rotate by non-illustrated hinges on an upper side of the outlet port 52 in a plate material 44. The opening and closing body 152 is opened to an outer side in a vehicle width direction by a flow of air discharged from an interior to outside a vehicle as shown by an arrow H.

In such a vent duct 150, as the impeller 48 rotates, for example in an arrow A direction, air of the interior (inside a luggage room 22) enters and passes through the impeller 48 inside the outer cylinder 46. Due to a flow of air at that time, the opening and closing body 152 is opened, and air is discharged outside the vehicle. Since the opening and closing body 152 is closed except when air is discharged (for example, when the vehicle is idling), it is possible to restrain exhaust gas and so on from entering from the vent duct 150 near an exhaust port (not shown).

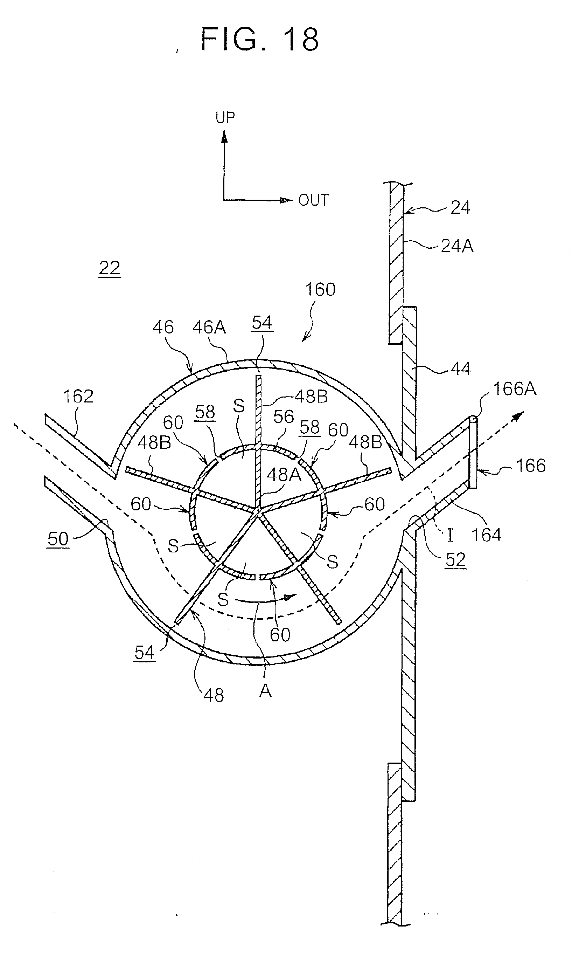

Next, a vent duct 160, to which a vent duct structure for a vehicle according to a fifth embodiment is applied, is explained by using FIG. 18. The same reference numerals are given to component parts same as those in the first to fourth embodiments, and explanation thereof is omitted.

As shown in FIG. 18, in the vent duct 160, an inlet port side duct 162 and an outlet port side duct 164 for controlling flow of air are provided in an inlet port 50 and an outlet port 52 of an outer cylinder 46, respectively. The inlet port side duct 162 is attached to be inclined with respect to a position where the inlet port 50 of the outer cylinder 46 is formed, so that a distal end of the inlet port side duct 162 comes to an upper side of a vehicle and on an inner side in a vehicle width direction, and a part of the inlet port side duct 162 connected to the outer cylinder 46 is on a lower side of the vehicle and on an outer side in the vehicle width direction. The outlet port side duct 164 is attached to be inclined with respect to a position where the outlet port 52 of the outer cylinder 46 is formed, so that a distal end of the outlet port side duct 164 is on the upper side of the vehicle and on the outer side in the vehicle width direction, and a part of the outlet port side duct 164 connected to the outer cylinder 46 is on the lower side of the vehicle and on the inner side in the vehicle width direction. In short, the outlet port side duct 164 is inclined with respect to the outer cylinder 46 to the same side as the inlet port side duct 162 in the vehicle upper-lower direction (in this embodiment, the upper side of the vehicle).

An opening and closing body 166 is provided in the distal end of the outlet port side duct 164. An upper part 166A of the opening and closing body 166 is supported to be able to open and close by non-illustrated hinges on an upper side of the distal end of the outlet port side duct 164.

In such a vent duct 160, air that enters from the distal end of the inlet port side duct 162 flows inside the inlet port side duct 162 to an obliquely lower side of the vehicle, is introduced into the outer cylinder 46, and passes through a lower part side of the outer cylinder 46 as shown by an arrow I, thereby rotating an impeller 48 in an arrow A direction. In addition, due to rotation of the impeller 48, air that passes through on the lower part side of the outer cylinder 46 flows inside the outlet port side duct 164 to an obliquely upper side of the vehicle, and is discharged outside the vehicle. From the distal end of the outlet port side duct 164, the opening and closing body 166 is opened due to a flow of air when the air is discharged. In this vent duct 160, a flow of air of an interior is controlled to the obliquely downward direction by the inlet port side duct 162 and flows into the outer cylinder 46, and the air passes through the lower part side of the outer cylinder 46 and flows in an obliquely upward direction from the outlet port side duct 164, thereby creating a flow of air in a constant direction. In short, by giving a flow of air a direction, it is possible to regulate a rotating direction of the impeller 48, and discharge air to outside the vehicle smoothly.

Further, the opening and closing body 166 is closed except when air is discharged (for example, when the vehicle is idling), it is possible to restrain discharge gas and so on from entering from the vent duct 160 near an exhaust port (not shown).

In the first to fifth embodiments, the number of the blades 48B provided in the impeller is five, but the present invention is not limited to this, and the number of the blades of the impeller may be set to a different number.

Further, in the first to fifth embodiments, the blades 48B of the impeller are arranged from the shaft part 48A linearly on an outer side in a radial direction, but the present invention is not limited to this, and the blades 48B of the impeller may be curved in a sectional view in a direction orthogonal to the shaft part 48A.

Further more, in the third embodiment, four of the wall bodies 136, which include the openings 58 and the closed spaces S behind the openings 58, are provided on the inner periphery side of the outer cylinder 132, but the present invention is not limited to this, and the number of the wall bodies 136 may be a different number.

Moreover, in the fifth embodiment, the inlet port side duct 162 and the outlet port side duct 164 are inclined so that the distal ends of the inlet port side duct 162 and the outlet port side duct 164 come to the upper side of the vehicle with respect to the inlet port 50 and the outlet port 52 of the outer cylinder 46, but the present invention is not limited to this, and each of angles of inclination of the inlet port side duct 162 and the outlet port side duct 164 may be changed as long as air is given a direction. For example, the inlet port side duct and the outlet port side duct may be arranged to be inclined so that the distal ends of the inlet port side duct and the outlet port side duct come to the lower side of the vehicle (the same side in the vehicle upper-lower direction) with respect to the inlet port 50 and the outlet port 52 of the outer cylinder 46, and the impeller 48 is rotated in an opposite direction to the arrow A.

The vent duct according to the first to fifth embodiments is provided in the inner plate 24A arranged at a position to be able to communicate with the luggage room 22 of the vehicle 10, but the present invention is not limited to this, and the vent duct may be provided in a vehicle body arranged at a position to be able to communicate with an interior space other than the luggage room 22. Also, the vent duct may be covered by an exterior member other than the bumper cover 28.

## Claims

1. A vent duct structure for a vehicle, comprising:

   an impeller provided in vehicle body arranged at a position so as to be able to communicate with an interior space of the vehicle, in which a plurality of blades are arranged radially, and the impeller is supported to be able to rotate; and
   an outer cylinder, which is provided in the vehicle body, covers a periphery of the impeller, and includes at least a pair of an inlet port and an outlet port in an outer peripheral wall for discharging air of an interior of the vehicle to exterior of the vehicle.

2. The vent duct structure for a vehicle according to claim 1, wherein, in at least one of the impeller and the outer cylinder, a wall body is provided, in which an opening arranged at a position facing an air passage part where air passes through, and a closed space communicating with the opening on an opposite side of the air passage part with respect to the opening, are formed.

3. The vent duct structure for a vehicle according to claim 2, wherein the wall body is provided between the neighboring blades of the impeller.

4. The vent duct structure for a vehicle according to claim 2, wherein a plurality of the wall bodies are provided on an inner periphery side of the outer cylinder.

5. The vent duct structure for a vehicle according to any one of claim 1 to claim 4, wherein
   an inlet port side duct and an outlet port side duct are provided in the inlet port and the outlet port of the outer cylinder for controlling a flow of air,
   the inlet port side duct is attached to be inclined with respect to a position where the inlet port of the outer cylinder is formed, and
   the outlet port side duct is attached to be inclined with respect to a position where the outlet port of the outer cylinder is formed, and to be inclined on a same side as the inlet port side duct in a vehicle upper-lower direction.

6. The vent duct structure for a vehicle according to any one of claim 1 to claim 4, wherein an opening and closing body, which is supported so as to be opened by wind when air is discharged, is provided in the outlet port of the outer cylinder.

7. The vent duct structure for a vehicle according to claim 5, wherein an opening and closing body, which is supported so as to be opened by wind when air is discharged, is provided in a distal end of the outlet port side duct.

# FIG. 1

# FIG. 2

UP

OUT

FR

10
10A
30
22
16
40(38)
18
20
26
14
12

# FIG. 3

EP 2 783 886 A1

# FIG. 4

EP 2 783 886 A1

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

UP

OUT

22

200

46   46A

202B

50

202B

202A

A

202B

202B

202B

202

B

B

24

24A

44

52

# FIG. 20

UP

FR

OUT

300

302

308

# FIG. 21

# FIG. 22

## INTERNATIONAL SEARCH REPORT

| International application No. |
|---|
| PCT/JP2011/077095 |

| A. CLASSIFICATION OF SUBJECT MATTER |
|---|
| *B60H1/26*(2006.01)i, *F24F7/013*(2006.01)i |

According to International Patent Classification (IPC) or to both national classification and IPC

| B. FIELDS SEARCHED |
|---|

Minimum documentation searched (classification system followed by classification symbols)
B60H1/26, F24F7/013

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 3-45418 A (Sanyo Electric Co., Ltd.),<br>27 February 1991 (27.02.1991),<br>page 3, lower left column, line 13 to page 4,<br>upper left column, line 9; fig. 1 to 5<br>(Family: none) | 1,5-7<br>2-4 |
| Y<br>A | JP 62-153639 A (National House Industrial Co.,<br>Ltd.),<br>08 July 1987 (08.07.1987),<br>page 3, upper left column, line 4 to page 3,<br>lower left column, line 4; fig. 3<br>(Family: none) | 1,5-7<br>2-4 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 03 February, 2012 (03.02.12) | 14 February, 2012 (14.02.12) |

| Name and mailing address of the ISA/<br>Japanese Patent Office | Authorized officer |
|---|---|
| Facsimile No. | Telephone No. |

Form PCT/ISA/210 (second sheet) (July 2009)

## INTERNATIONAL SEARCH REPORT

| International application No. |
| --- |
| PCT/JP2011/077095 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 58-206410 A  (Nissan Motor Co., Ltd.),<br>01 December 1983 (01.12.1983),<br>page 2, upper right column, lines 1 to 12;<br>fig. 2 to 3<br>(Family: none) | 5,7 |
| Y | Microfilm of the specification and drawings<br>annexed to the request of Japanese Utility<br>Model Application No. 181304/1984(Laid-open<br>No. 94408/1986)<br>(Nissan Diesel Motor Co., Ltd.),<br>18 June 1986 (18.06.1986),<br>specification, page 4, line 4 to page 5,<br>line 11; fig. 3<br>(Family: none) | 6,7 |
| A | JP 2003-182344 A  (Inoac Corp.),<br>03 July 2003 (03.07.2003),<br>paragraphs [0008] to [0013]; fig. 1 to 3<br>(Family: none) | 1-7 |
| A | JP 2006-123659 A  (Toyoda Gosei Co., Ltd.),<br>18 May 2006 (18.05.2006),<br>paragraphs [0016] to [0026]; fig. 1 to 3<br>(Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60049009 A
- JP 60049009 U
- JP 7276976 A